# FASCICULE DE BREVET EUROPEEN

(11) **EP 4 305 382 B1**
(45) Date de publication et mention de la délivrance du brevet: **26.11.2025**
(21) Numéro de dépôt: 22711273.7
(22) Date de dépôt: 01.03.2022
(51) Int. Cl.: G01C 19/5733, G01C 19/5621, G01C 19/5656

(54) **GYROMÈTRE VIBRANT À STRUCTURE PLANE**
VIBRATIONSKREISEL MIT PLANARER STRUKTUR
VIBRATING GYROSCOPE WITH PLANAR STRUCTURE

(30) Priorité: 10.03.2021 FR 2102249
(43) Date de publication de la demande: 17.01.2024
(73) Titulaire: Office National d'Etudes et de Recherches Aérospatiales, 91120 Palaiseau (FR)
(72) Inventeur: LE TRAON, Olivier, 91120 PALAISEAU (FR); LEVY, Raphaël, 91120 PALAISEAU (FR); GUERARD, Jean, 91120 PALAISEAU (FR); PERRIER, Thomas, 91120 PALAISEAU (FR)
(74) Mandataire: IPAZ
(86) Numéro de dépôt international: PCT/FR2022/050368
(87) Numéro de publication internationale: WO 2022/189730

(56) Documents cités:
- CN-A- 106 441 261
- US-A1- 2016 349 054

## Description

### Domaine technique

La présente invention concerne un capteur angulaire inertiel, ainsi qu'un gyromètre qui comprend un tel capteur. Elle fournit plusieurs modèles de gyromètres à structures planes qui sont réalisables par des procédés de gravure collective et qui procurent chacun un fonctionnement de gyromètre intégrateur. L'invention s'applique aussi bien à des matériaux piézoélectriques comme le cristal de quartz, qu'à d'autres matériaux cristallins qui sont usuels dans le domaine des microsystèmes, comme le silicium.

### Technique antérieure

De façon connue, il est possible de constituer un gyromètre à partir d'au moins une portion vibrante qui possède au moins deux modes distincts de vibration, lorsque ces deux modes sont susceptibles d'être couplés l'un à l'autre par une rotation qui est appliquée à l'au moins une portion vibrante. Le gyromètre comprend alors, en plus de la ou des portion(s) vibrante(s), des moyens d'excitation de l'un des deux modes de vibration, qui est appelé mode pilote, et des moyens de détection d'une amplitude de vibration de l'autre mode, qui est appelé mode détecteur.

Pour les gyromètres dits intégrateurs, ce n'est pas la vitesse de rotation qui est mesurée directement, mais une valeur qui correspond à l'angle de rotation selon lequel le gyromètre a été tourné par rapport à un référentiel galiléen. Ce principe de fonctionnement est connu sous le terme d'«inertialité de la vibration d'un corps », et a été démontré par Léon Foucault en 1851 avec son pendule. Il s'agit de l'expression résultante des forces d'inertie qui ont été mises en évidence par Gustave Coriolis, lorsque ces forces d'inertie s'exercent sur un ou plusieurs résonateur(s) qui ne possède(nt) aucun axe privilégié de vibration. La mesure directe du résultat de l'intégration de la vitesse angulaire par rapport au temps peut être très avantageuse pour des applications à forte dynamique, et quand l'information de déviation angulaire est essentielle. Tel est le cas, notamment, des applications de navigation inertielle.

De tels gyromètres intégrateurs bien connus utilisent des résonateurs hémisphériques ou des cloches, tels que théorisés par Lord Bryan en 1892 dans l'article «On a revolving cylinder or bell», Proceedings of the Cambridge Philosophical Society, Volume VII, October 28, 1889 - May 30, 1892. Pour de telles configurations de résonateur, la rotation produit un entraînement partiel de la vibration de résonateur, qui résulte d'un transfert d'énergie vibratoire partiel entre deux modes du résonateur qui sont dégénérés.

De façon connue, deux modes de vibration sont dits dégénérés lorsqu'ils correspondent à des catégories de déformations géométriques du résonateur qui sont distinctes, mais que ces modes possèdent une même valeur de fréquence de vibration. Dans toute la présente description, on désigne simplement par mode de vibration d'un résonateur ou d'un capteur angulaire inertiel un de ses modes propres de vibration, c'est-à-dire pour lequel une vibration qui est en cours dans ce mode continue sans se mélanger avec un autre mode propre de vibration du résonateur ou capteur, en l'absence de perturbation extérieure. Dans le cas d'un gyromètre, c'est la force de Coriolis qui produit un couplage entre deux modes propres, de sorte qu'une vibration qui est excitée selon l'un des deux modes propres est transférée partiellement ou totalement à l'autre mode propre. L'intensité de ce transfert d'énergie vibratoire constitue une mesure de la vitesse de rotation, ou de l'angle de rotation dans le cas d'un gyromètre intégrateur.

Un autre exemple de gyromètre intégrateur est basé sur une poutre qui est destinée à vibrer en flexion, lorsque cette poutre est constituée d'un matériau isotrope et possède une section telle que son inertie de flexion est identique entre au moins deux directions de flexion qui sont différentes. Tel est le cas, notamment, lorsque la section de la poutre est circulaire, carrée ou même en triangle isocèle, et plus généralement lorsque la poutre ne présente pas d'axe privilégié de vibration de flexion, contrairement au cas d'une poutre à section rectangulaire. Le lecteur aura bien compris que toute dissymétrie de la poutre ou de son encastrement sur un support est susceptible de ruiner l'effet escompté, et que pour obtenir l'inertialité de la vibration, la portion vibrante doit pouvoir être considérée comme étant isolée du monde extérieur, c'est-à-dire que sa vibration ne dépende pas des conditions de fixation de la portion vibrante. En outre, il peut être nécessaire que le matériau de la portion vibrante présente une symétrie qui est adaptée par rapport à la vibration considérée.

Pour des résonateurs en forme de microsystèmes, des structures planes sont nécessaires pour être réalisables facilement par des procédés de fabrication collective à partir d'une plaquette, ou «wafer» en anglais, du matériau sélectionné pour constituer le(s) résonateur(s) du gyromètre. Couramment, ce matériau est le silicium, monocristallin ou polycristallin, ou le cristal de quartz.

Pour les résonateurs à base de silicium, des masses sont généralement mises en mouvement en utilisant des forces électrostatiques, et les mouvements ainsi générés sont généralement détectés en effectuant des mesures de capacité d'au moins un condensateur qui est formé entre une partie en mouvement et une partie fixe.

Pour les résonateurs en matériau piézoélectrique, l'excitation utile d'une vibration par effet piézoélectrique et le signal utile qui est détecté ne sont plus constitués par des déplacements, mais par une contrainte mécanique ou une déformation. Il en résulte que des structures de résonateurs où la contrainte et la déformation sont réparties dans une zone étendue du résonateur sont plus adaptées pour un matériau piézoélectrique que des structures en forme de masses d'inertie non-déformables associées avec des ressorts, pour lesquelles les contraintes et déformations sont localisées uniquement dans les parties de matériau à fonction de ressort.

Un gyromètre intégrateur à structure plane et en matériau piézoélectrique a été proposé dans l'article intitulé «The theory of a piezoelectric disc gyroscope", J.S. Burdess & al., IEEE Transactions on Aerospace And Electronic Systems, 1986, Volume : AES-22, issue 4. Le résonateur qui est considéré dans cet article possède une forme de disque, et ses deux modes dégénérés de vibration sont sélectionnés par la conception des électrodes d'excitation et de détection. Un circuit électronique oscillant permet de suivre la précession naturelle de la vibration lorsque le résonateur est soumis à une rotation d'axe perpendiculaire au disque. Le principal inconvénient de ce gyromètre provient de la grande sensibilité du résonateur à ses conditions de fixation : la zone de fixation qui est située au centre du disque doit avoir une taille suffisante pour permettre une fixation efficace du résonateur, mais elle altère alors grandement les fréquences et les amortissements des deux modes de vibration utiles. Le plus souvent, la zone de fixation provoque une perte de la dégénérescence des deux modes, rendant difficile voire impossible le fonctionnement en gyroscope intégrateur. Des améliorations ont été proposées, par exemple dans FR 2 723 635 en utilisant des modes d'ordre supérieur, mais sans parvenir à une isolation suffisante du résonateur par rapport à son environnement.

La forme en disque pour le résonateur a aussi été utilisée avec le matériau de silicium, en proposant un disque ajouré permettant d'insérer des moyens d'excitation par force électrostatique, et des moyens de détection capacitive des modes de vibration, comme décrit dans US 7,040,163. Mais comme pour le disque en matériau piézoélectrique, sa fixation en son centre ne permet pas d'obtenir une dégénérescence suffisante des modes de vibration, et nécessite de recourir à des techniques d'équilibrage et/ou de compensation électronique, qui sont complexes et coûteuses.

D'autres structures vibrantes mettent en œuvre des masses indéformables qui sont reliées à des raideurs et des moyens de couplage entre les masses, comme par exemple celle décrite dans «Flat is not dead : current and future performance of Si-MEMS Quad Mass Gyro (QMG) system», A.A. Trusov & al., DOI : 10.1109/PLANS.2014.6851383. La structure décrite dans cet article est composée par quatre masses qui sont couplées entre elles deux par deux par des systèmes de leviers pour imposer des déplacements en opposition de phase. Mais ces leviers sont complexes à réaliser et requièrent une grande précision de fabrication pour obtenir la symétrie entre les modes vibration dans le plan de la structure. Cette structure nécessite donc l'introduction de systèmes annexes pour équilibrer les modes utiles, notamment en ajoutant des raideurs électrostatiques.

Le document CN 106 441 261 A décrit un gyroscope micromécanique à quatre masses oscillantes qui sont connectées à des anneaux interne et externe, leurs connexions à l'anneau interne étant réalisées par des leviers. L'ensemble de ce gyroscope est invariant par rotation de 90°.

### Problème technique

A partir de cette situation, un but de la présente invention est de fournir un nouveau capteur angulaire inertiel pour gyromètre intégrateur, qui soit amélioré pour certains au moins des inconvénients des capteurs antérieurs, tels que rappelés ci-dessus.

Un but annexe de l'invention est de fournir un tel capteur pour lequel les pertes d'énergie de vibration vers l'extérieur sont réduites, afin de procurer une valeur de facteur de qualité qui soit accrue, et d'obtenir plus aisément deux modes dégénérés.

Un autre but annexe de l'invention est de réduire les défauts de symétrie qui peuvent affecter la forme du capteur lorsque celui-ci est réalisé par des procédés de gravure chimique humide, qui sont des procédés de réalisation à bas coût, à cause des écarts de vitesse de gravure qui existent entre des orientations cristallines différentes d'un matériau utilisé pour constituer le capteur.

### Résumé de l'invention

Pour atteindre l'un au moins de ces buts ou un autre, l'invention propose un nouveau capteur angulaire inertiel selon la revendication 1, qui comprend au moins trois résonateurs identiques et disposés symétriquement autour d'un axe, appelé axe sensible, de façon à être invariants par une rotation de 2π/n autour de cet axe sensible, où n est le nombre des résonateurs du capteur. Les n résonateurs sont couplés entre eux de sorte que le capteur possède au moins deux modes dégénérés de vibration permettant de caractériser une rotation du capteur autour de l'axe sensible.

Selon une première caractéristique du capteur de l'invention, chacun des résonateurs comprend une portion respective d'une plaquette à deux faces opposées qui sont planes et parallèles, la portion de plaquette dédiée à chaque résonateur étant destinée à vibrer lors d'une utilisation du capteur, et appelée portion vibrante de ce résonateur. En outre, la plaquette est commune aux n résonateurs du capteur.

Selon une deuxième caractéristique du capteur de l'invention, chaque portion vibrante est destinée à vibrer par flexion lors de l'utilisation du capteur.

Enfin, selon une troisième caractéristique du capteur de l'invention, le capteur comprend en outre un élément de couplage qui relie la portion vibrante de chaque résonateur aux portions vibrantes de tous les autres des n résonateurs du capteur, l'élément de couplage étant aussi invariant par la rotation de 2π/n autour de l'axe sensible, et les portions vibrantes des n résonateurs étant réparties angulairement autour de l'élément de couplage.

Le capteur de l'invention peut être produit industriellement à bas coût, en utilisant des procédés de fabrication collective à partir de la plaquette qui est destinée à constituer la portion vibrante de chacun des n résonateurs.

En outre, le capteur inertiel angulaire de l'invention est adapté pour entrer dans la constitution d'un gyromètre intégrateur, car il possède deux modes de vibration qui sont dégénérés et pour lesquels de l'énergie vibratoire est susceptible d'être transférée d'un mode à l'autre par une rotation qui est subie par le capteur, autour de son axe sensible par rapport à un référentiel galiléen. Plus précisément, la valeur du nombre des résonateurs séparés qui constituent le capteur, supérieure ou égale à trois, permet de combiner l'existence d'une paire de modes dégénérés de vibration avec la possibilité pour une rotation autour de l'axe sensible de transférer de l'énergie entre ceux-ci. Comme cela a été rappelé plus haut, les deux modes qui sont dégénérés ont une valeur commune de fréquence de vibration, mais il est possible que le capteur possède plusieurs valeurs de fréquence de vibration qui sont associées chacune à deux modes dégénérés de vibration.

Enfin, l'élément de couplage du capteur de l'invention étant invariant par la rotation de 2π/n autour de l'axe sensible du capteur, il préserve la dégénérescence entre les deux modes de vibration de l'ensemble des résonateurs tout en assurant pour une rotation autour de l'axe sensible qui est à mesurer, une bonne efficacité à transférer de l'énergie vibratoire entre les deux modes dégénérés de vibration. Le capteur procure ainsi une sensibilité de détection et de mesure qui est élevée à un gyromètre auquel il est incorporé.

De préférence, le nombre n des résonateurs du capteur est inférieur ou égal à huit.

De préférence aussi, chaque portion vibrante peut être destinée à vibrer par flexion parallèlement aux faces de la plaquette lors de l'utilisation du capteur.

De préférence encore, l'élément de couplage peut être constitué par un motif qui est formé dans la plaquette, en étant continu de matériau avec la portion vibrante de chacun des résonateurs du capteur.

Selon une quatrième caractéristique de l'invention, la portion vibrante de chaque résonateur est reliée à une partie de support du capteur qui est externe aux portions vibrantes et à l'élément de couplage, par un segment intermédiaire de la plaquette, appelé pied. Chaque pied est continu de matériau avec la portion vibrante et forme une liaison entre cette dernière et la partie de support. Alors, pour chaque résonateur :
la portion vibrante de ce résonateur possède un premier plan de symétrie, appelé plan médian, qui est parallèle aux deux faces de la plaquette et équidistant avec ces deux faces, et un second plan de symétrie, appelé plan de symétrie orthogonal à la plaquette, qui est perpendiculaire au plan médian et passe longitudinalement par la liaison que forme le pied entre la partie de support et la portion vibrante,
une intersection entre le plan médian et le plan de symétrie orthogonal à la plaquette constitue un axe médian de la portion vibrante,
la portion vibrante comprend deux extensions qui sont destinées chacune à vibrer par flexion, ces deux extensions s'étendant à partir du pied symétriquement de chaque côté du plan de symétrie orthogonal à la plaquette,
chaque extension est pourvue d'une fente longitudinale qui traverse la portion vibrante perpendiculairement au plan médian, à partir du plan de symétrie orthogonal à la plaquette en direction d'une extrémité distale de cette extension, mais sans atteindre cette extrémité distale, de sorte que chaque extension soit formée par un méandre,
les fentes respectives des deux extensions sont symétriques par rapport au plan de symétrie orthogonal à la plaquette, et se rejoignent au niveau de ce plan de symétrie orthogonal à la plaquette, de sorte que la portion vibrante comprenne deux segments primaires qui relient chacun le pied à l'extrémité distale de l'une des extensions, et deux segments secondaires qui sont reliés l'un à l'autre au niveau du plan de symétrie orthogonal à la plaquette par des extrémités proximales respectives de ces segments secondaires, et qui s'étendent chacun jusqu'à l'extrémité distale de l'une des extensions pour être connectée à l'un des segments primaires au niveau de cette extrémité distale.

Grâce à une telle configuration de la portion vibrante de chacun des résonateurs du capteur, cette portion vibrante ne possède, pour les deux modes dégénérés de vibration du capteur qui permettent de caractériser la rotation autour de l'axe sensible, que des déplacements qui sont parallèles au plan médian, et qui sont symétriques par rapport au plan de symétrie orthogonal à la plaquette. De plus, les deux segments primaires ont des composantes de vitesse instantanées, parallèles à l'axe médian, qui ont un sens opposé à chaque instant pendant la vibration, au sens des composantes de vitesse instantanées des segments secondaires, aussi parallèles à l'axe médian. Ces orientations opposées de vitesse permettent à des composantes de quantité de mouvement qui leur sont associées de se compenser au moins partiellement pour chaque résonateur, si bien que des déplacements qui sont transmis au pied de ce résonateur par la portion vibrante sont réduits. Il en résulte que le résonateur possède des pertes d'énergie de vibration qui sont faibles, et par conséquent que son facteur de qualité peut être élevé. Par suite, le facteur de qualité du capteur qui est effectif pour chacun des deux modes dégénérés de vibration est aussi élevé.

Avantageusement, pour chaque résonateur, la portion vibrante peut présenter une répartition de masse telle que chaque mode dégénéré de vibration du capteur qui ne comporte que des déplacements parallèles au plan médian et qui est symétrique par rapport au plan de symétrie orthogonal à la plaquette, pour le résonateur considéré, ne provoque pas de déplacement du pied parallèlement à l'axe médian. Autrement dit, la compensation des composantes de quantité de mouvement de chaque portion vibrante, qui sont parallèles à l'axe médian du résonateur considéré, peut être exacte ou quasi-exacte. Dans ce cas, les pertes d'énergie de vibration par les pieds des résonateurs sont nulles ou quasi-nulles, et le facteur de qualité du capteur pour les deux modes dégénérés de vibration peut être très élevé. En outre, une telle absence de déplacement des pieds rend le capteur insensible à des défauts de symétrie qui pourraient exister dans sa fixation à une embase externe, et qui pourraient supprimer la dégénérescence entre les modes de vibration.

Possiblement, chaque extension de chaque résonateur peut comporter, au niveau de son extrémité distale et parallèlement au plan médian, un élargissement par rapport à des bords longitudinaux externes des segments primaire et secondaire de cette extension. De tels élargissements procurent un degré de liberté supplémentaire pour réaliser la compensation des composantes de quantité de mouvement qui sont parallèles à l'axe médian, au sein de chaque portion vibrante. Ainsi, la conception de résonateurs qui ne transmettent pas de mouvement par leurs pieds est facilitée.

Pour les modes préférés de réalisation de l'invention, l'élément de couplage peut avantageusement être relié à la portion vibrante de chaque résonateur au niveau des extrémités proximales des segments secondaires qui sont reliées l'une à l'autre, parallèlement à l'axe médian du résonateur et sur un côté de sa portion vibrante qui est opposé à son pied. Une telle configuration du capteur accroît le transfert d'énergie vibratoire que produit la rotation à mesurer entre les deux modes dégénérés de vibration, de sorte que la sensibilité du capteur est encore supérieure.

Le matériau de la plaquette peut avantageusement être monocristallin de classe trigonale et piézoélectrique. Dans ce cas, pour chaque résonateur d'un mode préféré de réalisation de l'invention tel que spécifié ci-dessus, l'axe médian de sa portion vibrante peut être parallèle à un axe Xc du matériau, et les deux segments primaires ainsi que les deux segments secondaires de cette portion vibrante peuvent être parallèles à des axes Yc du matériau. Autrement dit, l'une des deux extensions de chaque portion vibrante peut être parallèle à l'axe cristallographique Yc+ et l'autre parallèle à l'axe cristallographique Yc-. Elles forment alors entre elles un angle qui est égal à 60° (degré). Ainsi, chacun des résonateurs du capteur peut être symétrique tel qu'il est directement produit en utilisant un procédé de gravure chimique humide pour découper le motif du capteur dans la plaquette. En particulier, la plaquette peut être en cristal de quartz α (α-SiO₂) ou tout autre cristal du système trigonal de classe de symétrie 32, comme l'orthophosphate de gallium (GaPO₄), l'oxyde de germanium (GeO₂), l'arséniate de gallium (GaAsO₄), ou encore les cristaux de la famille des LGX : la langasite (LGS ou La₃Ga₅SiO₁₄), le langatate (LGT ou La₃Ga₅,5TaO,5O₁₄) ou la langanite (LGN ou La₃Ga₅,5NbO,5O₁₄).

Alternativement, les deux extensions de chaque portion vibrante peuvent former entre elles un angle qui est égal à 90° ou 180°.

De façon générale pour l'invention, le capteur peut comprendre en outre :
- des moyens d'excitation, adaptés pour générer des déformations par flexion des portions vibrantes des n résonateurs selon un premier des modes dégénérés de vibration du capteur ; et
- des moyens de détection, adaptés pour mesurer une amplitude de vibration du capteur selon un autre des modes dégénérés de vibration, qui est différent du premier mode dégénéré de vibration.

Enfin, un second aspect de l'invention concerne un gyromètre qui comprend un capteur conforme premier aspect de l'invention. Le fonctionnement d'un tel gyromètre utilise le couplage qui est produit par des forces de Coriolis entre les deux modes dégénérés de vibration. Il est du type gyromètre intégrateur.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1a] est une vue en plan d'un premier capteur angulaire inertiel qui est conforme à l'invention ;
[Fig. 1b] correspond à [Fig. 1a] pour montrer un premier mode de vibration dégénéré du premier capteur angulaire inertiel ;
[Fig. 1c] correspond à [Fig. 1b] pour montrer un second mode de vibration dégénéré du premier capteur angulaire inertiel ;
[Fig. 2a] correspond à [Fig. 1a] pour un deuxième capteur angulaire inertiel qui est aussi conforme à l'invention ;
[Fig. 2b] correspond à [Fig. 1b] pour le deuxième capteur angulaire inertiel ;
[Fig. 2c] correspond à [Fig. 1c] pour le deuxième capteur angulaire inertiel ;
[Fig. 3a] correspond à [Fig. 1a] pour un troisième capteur angulaire inertiel qui est aussi conforme à l'invention ;
[Fig. 3b] correspond à [Fig. 1b] pour le troisième capteur angulaire inertiel ;
[Fig. 3c] correspond à [Fig. 1c] pour le troisième capteur angulaire inertiel ;
[Fig. 4a] correspond à [Fig. 1a] pour un quatrième capteur angulaire inertiel qui est aussi conforme à l'invention ;
[Fig. 4b] correspond à [Fig. 1b] pour le quatrième capteur angulaire inertiel ;
[Fig. 4c] correspond à [Fig. 1c] pour le quatrième capteur angulaire inertiel ;
[Fig. 5a] est une vue en plan qui montre un premier modèle de résonateur qui peut être utilisé dans des modes préférés de réalisation de l'invention ;
[Fig. 5b] correspond à [Fig. 5a] pour montrer des déformations d'un mode de vibration du premier modèle de résonateur, avec des quantités de mouvement associées ;
[Fig. 5c] correspond à [Fig. 5a] pour un second modèle de résonateur qui peut être utilisé dans d'autres modes préférés de réalisation de l'invention ;
[Fig. 5d] correspond à [Fig. 5b] pour le second modèle de résonateur ;
[Fig. 6a] correspond à [Fig. 1a] pour un cinquième capteur angulaire inertiel qui est aussi conforme à l'invention, et qui utilise le premier modèle de résonateur de [Fig. 5a]-[Fig. 5b] ;
[Fig. 6b] correspond à [Fig. 1b] pour le cinquième capteur angulaire inertiel ;
[Fig. 6c] correspond à [Fig. 1c] pour le cinquième capteur angulaire inertiel ;
[Fig. 7a] correspond à [Fig. 1a] pour un sixième capteur angulaire inertiel qui est aussi conforme à l'invention, et qui utilise le second modèle de résonateur de [Fig. 5c]-[Fig. 5d] ;
[Fig. 7b] correspond à [Fig. 1b] pour le sixième capteur angulaire inertiel ;
[Fig. 7c] correspond à [Fig. 1c] pour le sixième capteur angulaire inertiel ;
[Fig. 8a] correspond à [Fig. 1a] pour un septième capteur angulaire inertiel qui est aussi conforme à l'invention ;
[Fig. 8b] correspond à [Fig. 1b] pour le septième capteur angulaire inertiel ;
[Fig. 8c] correspond à [Fig. 1c] pour le septième capteur angulaire inertiel ; et
[Fig. 9] est un rappel sur une configuration possible d'électrodes, adaptée pour un couplage piézoélectrique qui peut être utilisé pour exciter et détecter des vibrations de flexion d'une poutre, dans le cas d'un matériau de la poutre qui est piézoélectrique et appartient au système trigonal et de classe de symétrie 32, comme le quartz α.

### Description détaillée de l'invention

Pour raison de clarté, les dimensions des éléments qui sont représentés dans ces figures ne correspondent ni à des dimensions réelles, ni à des rapports de dimensions réels. Notamment, toutes les déformations de résonateurs qui sont représentées sont exagérément agrandies pour les rendre visibles. En outre, des références identiques qui sont indiquées dans des figures différentes désignent des éléments ou des mesures identiques, ou qui ont des fonctions identiques.

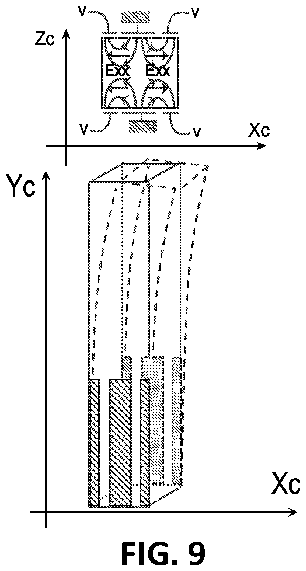

Toutes les figures, sauf [Fig. 9], montrent des capteurs angulaires inertiels ou des résonateurs qui sont découpés dans une plaquette de matériau solide, à deux faces planes et parallèles. Ces figures sont des vues dans un plan qui est parallèle aux deux faces de la plaquette, intermédiaire et équidistant entre ces deux faces. Ce plan est donc un plan de symétrie de chaque capteur ou résonateur, appelé plan médian. La plaquette utilisée peut avoir une épaisseur de quelques micromètres à quelques millimètres, lorsque cette épaisseur est mesurée perpendiculairement à ses faces, et pour des capteurs de petites tailles qui sont réalisés par des procédés de gravure collective.

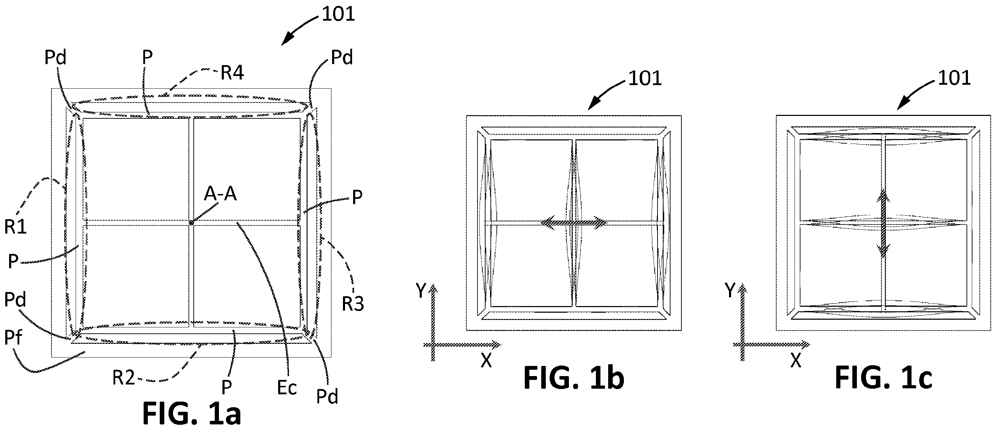

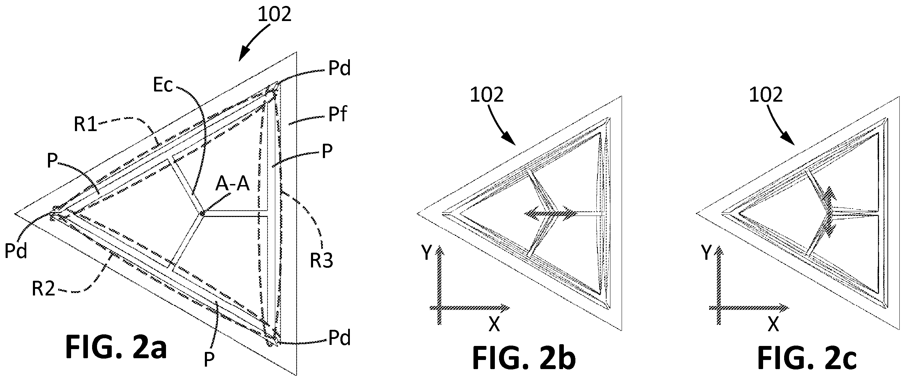

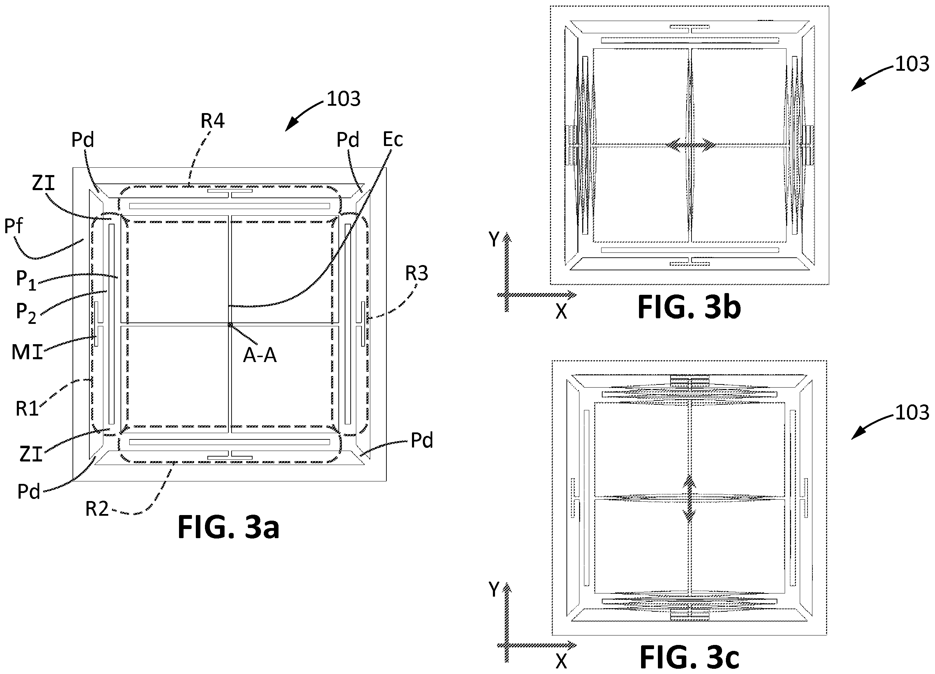

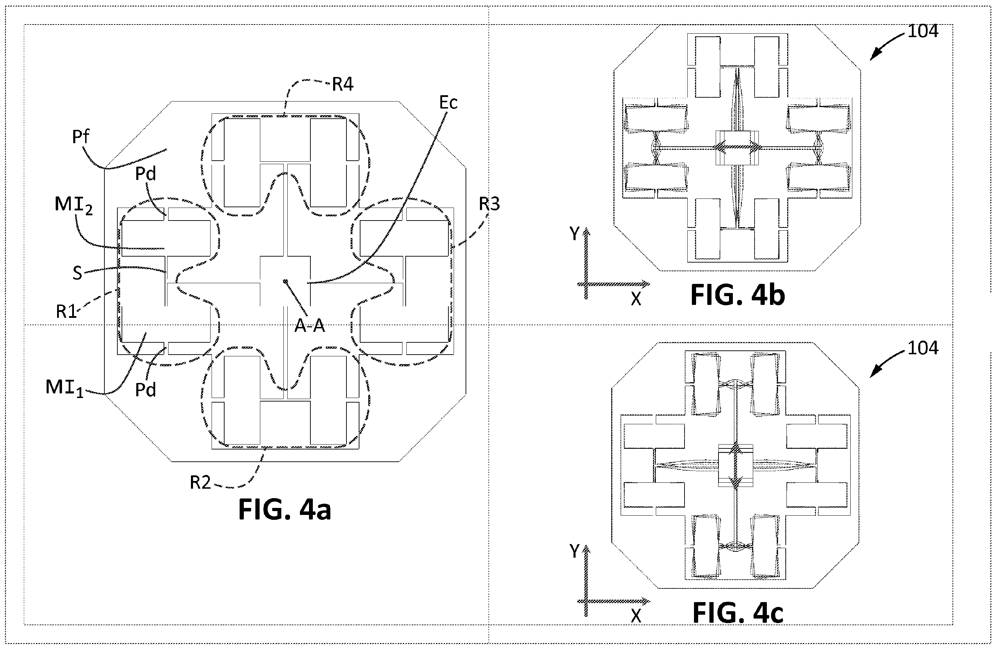

[Fig. 1a]-[Fig. 1c], [Fig. 2a]-[Fig. 2c], [Fig. 3a]-[Fig. 3c] et [Fig. 4a]-[Fig. 4c] ne correspondent pas à l'invention revendiquée, et les parties de description fournies en relation avec ces figures ont pour but de faciliter la compréhension de l'invention et de ses avantages.

[Fig. 1a] montre un premier capteur angulaire inertiel 101 conforme à l'invention, à quatre résonateurs : n=4. Il comprend une partie de support, aussi appelée partie fixe et désignée par la référence Pf, en forme de cadre périphérique carré. Cette partie fixe Pf est destinée à fixer le capteur 101 sur une embase (non représentée), et à établir des contacts électriques entre des électrodes (non représentées) qui sont portées par les résonateurs et un circuit électronique d'excitation et de détection (non-représenté). Quatre poutres P sont situées à l'intérieur du cadre de la partie fixe Pf, parallèlement à ses quatre côtés et à distance de ceux-ci. Chaque poutre P et reliée à ses deux extrémités opposées à la partie fixe Pf, par deux pieds Pd qui sont situés dans les angles de la partie fixe Pf. Ainsi, chaque pied Pd est commun à deux des poutres P qui sont adjacentes. Chaque poutre P peut alors vibrer en flexion parallèlement au plan médian entre ses deux extrémités, et constitue ainsi un résonateur séparé, les quatre résonateurs étant désignés individuellement par les références R1, R2, R3 et R4. Chaque poutre P constitue ainsi la portion vibrante de chaque résonateur. Le capteur 101 comprend en outre un élément de couplage en forme de croix, désigné par Ec. L'élément de couplage Ec est aussi découpé dans la plaquette, comme les poutres P et les pieds Pd, et les extrémités des bras de l'élément de couplage Ec sont connectés un-à-un aux milieux respectifs des poutres P. Ainsi, l'ensemble du capteur 101, comprenant la partie fixe Pf, les pieds Pd, les poutres P et l'élément de couplage Ec est invariant par une rotation de π/2 d'axe perpendiculaire au plan médian et passant par le centre du capteur. Un tel capteur possède deux modes dégénérés, qui correspondent à des déplacements oscillants d'un point central de l'élément de couplage Ec qui sont parallèles à l'axe X pour le premier mode, tel que montré dans [Fig. 1b], et parallèles à l'axe Y pour le second mode, tel que montré dans [Fig. 1c]. Par symétrie, ces deux modes ont des valeurs respectives de fréquence de vibration qui sont identiques, si bien qu'ils sont dégénérés. En outre, la force de Coriolis, telle que générée par une rotation du capteur autour de l'axe A-A qui est perpendiculaire à la plaquette et qui passe par le centre du capteur, telle qu'elle s'exerce sur l'élément de couplage Ec, produit un couplage entre ces deux modes dégénérés. Ainsi, la rotation du capteur 101 génère un transfert d'énergie vibratoire d'un mode à l'autre. Ce premier capteur angulaire inertiel 101 est donc adapté pour réaliser un gyromètre intégrateur ayant l'axe A-A pour axe sensible.

[Fig. 2a] montre un second capteur angulaire inertiel 102 qui est aussi conforme à l'invention, mais à trois résonateurs : n=3. La conception de ce second capteur et la même que celle du premier capteur de [Fig. 1a], en remplaçant la forme carrée du cadre de la partie fixe Pf par une forme en triangle équilatéral. Il comporte donc trois résonateurs séparés R1-R3 formés chacun par une poutre P qui est connectée à la partie fixe Pf par ses deux extrémités opposées, et un élément de couplage Ec à trois bras séparés de 120° entre deux bras voisins. Chaque bras de l'élément de couplage Ec est encore connecté au milieu d'une des trois poutres P. Ce second capteur 102 possède encore deux modes dégénérés de vibration : le premier mode dans lequel le point central de l'élément de couplage Ec possède des déplacements oscillants qui sont parallèles à l'axe X, tel que montré dans [Fig. 2b], et le second mode dans lequel le point central de l'élément de couplage Ec possède des déplacements oscillants qui sont parallèles à l'axe Y, tel que montré dans [Fig. 2c]. Ce second capteur angulaire inertiel 102 est donc aussi adapté pour réaliser un gyromètre intégrateur.

Toutefois, pour les deux capteurs de [Fig. 1a]-[Fig. 1c] et [Fig. 2a]-[Fig. 2c], des quantités de mouvement mises en jeu dans chacun des deux modes dégénérés de vibration ne sont pas équilibrées et, à cause de cela, la partie fixe Pf est animée d'un mouvement qui est inverse de celui de l'ensemble des résonateurs et de l'élément de couplage Ec. Cette transmission de mouvement à la partie fixe Pf se produit par les pieds Pd, et le capteur devient ensuite très sensible aux conditions de fixation de la partie fixe Pf sur l'embase externe. Notamment, une perte de symétrie entre les axes X et Y qui est provoquée par ces conditions de fixation résulte en une rupture de la dégénérescence entre les deux modes propres de vibration du capteur. Le gyromètre ne possède alors plus le fonctionnement en intégrateur. Or, en général, les conditions de fixation de la partie fixe Pf sur l'embase externe ne peuvent pas être contrôlées suffisamment, notamment lorsque cette fixation est réalisée par collage. En outre, le mouvement qui est transmis à la partie fixe Pf provoque des pertes d'énergie vibratoire des modes de vibration, ce qui crée une surtension à la résonance et dégrade la sensibilité du gyromètre. Le perfectionnement de l'invention qui est décrit maintenant remédie à cet inconvénient.

Selon ce perfectionnement, chacun des résonateurs du capteur est équilibré individuellement, si bien qu'il devient découplé dynamiquement de la partie fixe Pf. Ainsi, les vibrations de chaque résonateur ne provoquent pas de déplacement du ou des pied(s) au(x)quel(s) il est connecté, de sorte qu'aucune perte d'énergie vibratoire ne se produit par les pieds. Les modes dégénérés de vibration du capteur deviennent ainsi insensibles à des défauts de symétrie de la fixation de sa partie fixe Pf sur l'embase externe, si bien que le gyromètre qui intègre le capteur peut posséder un fonctionnement intégrateur de haute performance. Autrement dit, le présent perfectionnement de l'invention consiste à utiliser un modèle de résonateur qui est intrinsèquement équilibré, en plus de l'agencement axisymétrique d'ordre n du capteur angulaire inertiel.

Des résonateurs qui sont ainsi découplés de leur partie fixe sont connus de l'art antérieur, notamment le diapason doublement encastré décrit dans US 4,215,570 et la simple lame doublement encastrée avec des masses d'inertie à ses deux extrémités, telle que décrite dans FR 8 418 587.

Autrement dit, le présent perfectionnement de l'invention consiste à utiliser un modèle de résonateur qui est intrinsèquement équilibré dans l'agencement axisymétrique d'ordre n du capteur angulaire inertiel.

Le troisième capteur angulaire inertiel 103 de [Fig. 3a] reprend la symétrie axiale d'ordre 4 (n=4) du capteur de [Fig. 1a], mais en utilisant le modèle de résonateur en diapason doublement encastré. Ainsi, chacun des résonateurs R1-R4 est constitué par deux poutres P₁ et P₂ qui sont parallèles et s'étendent chacune entre les deux pieds Pd auxquels est connecté ce résonateur. De préférence, chaque résonateur R1-R4 possède une zone intermédiaire ZI entre les poutres P₁ et P₂ et chaque pied Pd, dans laquelle les deux poutres sont encastrées. De telles zones intermédiaires ZI suppriment des efforts résiduels qui seraient transmis par les poutres P₁ et P₂ aux pieds Pd. En outre, des masses d'inertie additionnelles MI sont connectées rigidement à la poutre P₂ de chaque résonateur pour équilibrer la contribution d'inertie que génère l'élément de couplage Ec sur la poutre P₁ de ce résonateur. De préférence, chaque masse d'inertie additionnelle MI peut être constituée par un segment de plaquette qui est connecté par son centre au milieu de la poutre P₂, afin de ne pas modifier la raideur de cette dernière ni constituer une perte de symétrie au sein résonateur. [Fig. 3b] et [Fig. 3c] montrent les deux modes dégénérés de vibration qui sont alors effectifs pour un tel capteur, avec des déplacements de l'élément de couplage Ec qui sont parallèles à l'axe X ou à l'axe Y, respectivement. Pour chacun de ces modes dégénérés de vibration, les deux poutres P₁ et P₂ vibrent en opposition de phase, en s'écartant puis se rapprochant l'une de l'autre par des flexions respectives qui sont parallèles au plan médian, si bien qu'aucune force résultante n'est transmise à chaque pied Pd du capteur 103. La partie fixe Pf du capteur 103 reste donc immobile pendant les vibrations de chacun des deux modes dégénérés, de sorte que le gyromètre peut avoir un fonctionnement d'intégrateur à haute performance.

Le quatrième capteur angulaire inertiel 104 de [Fig. 4a] reprend encore la symétrie axiale d'ordre 4 (n=4) du capteur de [Fig. 1a], mais en utilisant cette fois un modèle de résonateur décrit dans FR 8 418 587 pour constituer chacun des résonateurs R1-R4. Chaque résonateur comporte ainsi deux masses d'inertie MI₁ et MI₂, qui sont reliées chacune à la partie fixe Pf par un pied respectif Pd à fonction de charnière. Les masses d'inertie MI₁ et MI₂ sont en plus connectées l'une à l'autre par un segment flexible S. Lorsque chaque résonateur R1-R4 vibre, ses deux masses d'inertie MI₁ et MI₂ tournent en sens opposés et en se déplaçant vers un même côté, parallèlement aux faces de la plaquette, tandis qu'une partie centrale du segment flexible S se déplace vers le côté opposé. Chaque bras de l'élément de couplage Ec est connecté au milieu du segment flexible S de l'un des résonateurs R1-R4. Alors, en adoptant un dimensionnement des masses d'inertie MI₁ et MI₂ qui prend en compte la masse de l'élément de couplage Ec, et en ajoutant éventuellement une masse d'inertie supplémentaire au centre de l'élément de couplage Ec, chaque résonateur R1-R4 apparaît individuellement équilibré au sein du capteur 104. [Fig. 4b] et [Fig. 4c] montrent les deux modes dégénérés de vibration d'un tel capteur 104, avec des déplacements de l'élément de couplage Ec qui sont parallèles à l'axe X ou à l'axe Y, respectivement. Un gyromètre qui incorpore ce quatrième capteur angulaire inertiel 104 peut avoir un fonctionnement d'intégrateur à haute performance.

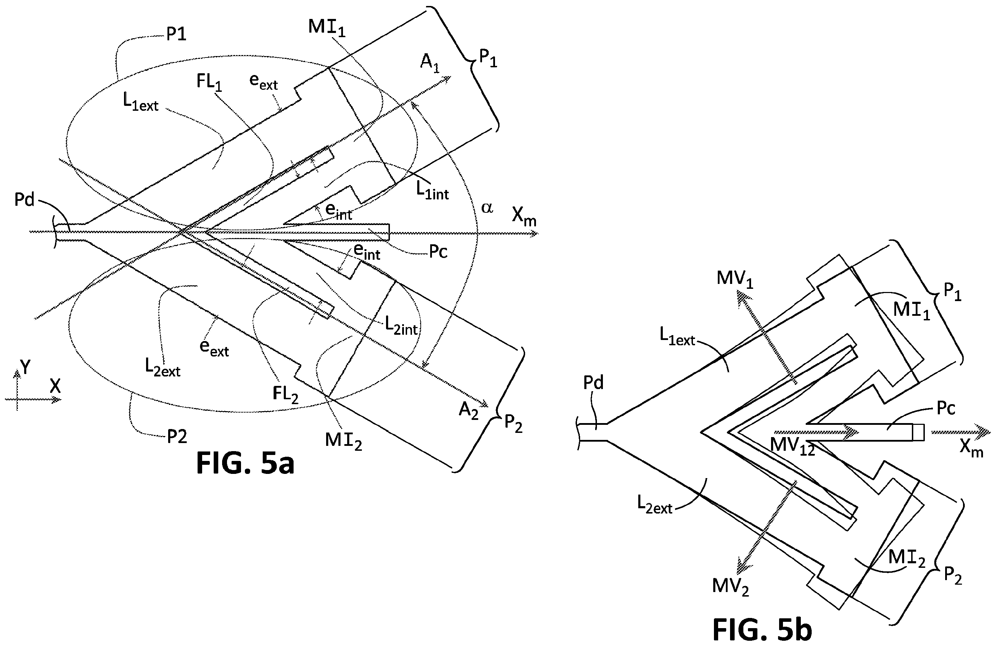

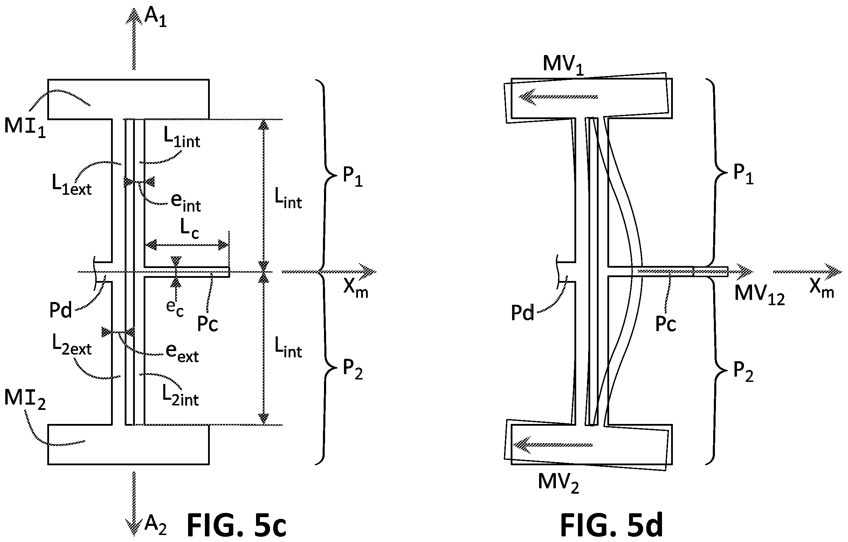

Toutefois, les deux configurations de capteurs de [Fig. 3a] et [Fig. 4a] sont encombrantes et, pour cette raison, sont mal adaptées pour des applications qui requièrent des niveaux de miniaturisation qui sont importants. [Fig. 5a] et [Fig. 5c] montrent deux nouveaux modèles de résonateurs qui sont équilibrés, et qui peuvent être utilisés pour constituer des capteurs angulaires inertiels qui sont encore conformes au perfectionnement de l'invention. En outre, ces deux nouveaux modèles de résonateurs peuvent être réalisés avec des encombrements réduits par rapport aux modèles de résonateurs qui apparaissent dans [Fig. 3a] et [Fig. 4a].

Contrairement aux résonateurs utilisés précédemment, chacun de ceux de [Fig. 5a] et [Fig. 5c] n'est connecté à la partie fixe Pf que par un pied Pd unique. En outre, chaque résonateur est constitué individuellement par une portion vibrante à deux extensions, désignées par P₁ et P₂ respectivement, et qui s'étendent longitudinalement selon des axes respectifs A₁ et A₂. Pour le résonateur de [Fig. 5a], les axes A₁ et A₂ forment entre eux un angle α qui est égal à 60°, et pour le résonateur de [Fig. 5c], l'angle α entre les axes A₁ et A₂ est égal à 180°. Les deux extensions P₁ et P₂ s'étendent à partir du pied Pd symétriquement de part et d'autre d'un axe médian Xₘ qui coïncide avec une direction longitudinale du pied Pd. Cet axe médian Xₘ correspond à l'intersection entre le plan médian déjà introduit, et un autre plan de symétrie qui est orthogonal aux faces de la plaquette et pour lequel les deux extensions P₁ et P₂ se correspondent par symétrie-miroir. Dans la suite de cette description, et par analogie avec un résonateur en diapason tel que décrit dans US 3,683,213, les deux extensions P₁ et P₂ sont aussi appelées poutres P₁ et P₂. Selon une caractéristique originale des résonateurs de [Fig. 5a] et [Fig. 5c], une fente longitudinale est ménagée sur chaque poutre P₁, P₂, et désignée par la référence FL₁, FL₂ respectivement. Ces deux fentes longitudinales FL₁ et FL₂ se rejoignent au niveau de l'axe médian Xₘ du résonateur. Chaque poutre Pᵢ, l'indice i étant égal à 1 ou 2, est ainsi constituée de deux lames Lᵢₑₓₜ et Lᵢᵢₙₜ. Dans la partie générale de la présente description, la lame L₁ₑₓₜ (respectivement L₂ₑₓₜ) a été appelée segment primaire de l'extension P₁ (resp. P₂), et la lame L₁ᵢₙₜ (respectivement L₂ᵢₙₜ) a été appelée segment secondaire de l'extension P₁ (resp. P₂). Ainsi, les deux lames L₁ₑₓₜ et L₂ₑₓₜ sont reliées au pied Pd, et s'étendent jusqu'à des extrémités distales respectives des poutres P₁ et P₂, où elles sont reliées une-à-une aux deux lames L₁ᵢₙₜ et L₂ᵢₙₜ. Ainsi, chaque poutre ou extension P₁, P₂ forme un méandre entre l'axe médian Xₘ et son extrémité distale. En outre, les lames L₁ᵢₙₜ et L₂ᵢₙₜ sont reliées entre elles au niveau de l'axe médian Xₘ, par des extrémités proximales respectives de ces deux lames L₁ᵢₙₜ et L₂ᵢₙₜ. Les deux fentes longitudinales FL₁ et FL₂ des poutres P₁ et P₂, respectivement, se rejoignent aussi au niveau de l'axe médian Xₘ, de sorte la jonction des extrémités proximales respectives des deux lames L₁ᵢₙₜ et L₂ᵢₙₜ est séparée des lames L₁ₑₓₜ et L₂ₑₓₜ et du pied Pd.

Pour le résonateur de [Fig. 5a], et comme cela est montré dans [Fig. 5b], lorsque, au cours d'une vibration du résonateur, les extrémités distales des extensions P₁ et P₂ s'écartent symétriquement de l'axe médian Xₘ dans des sens opposés, les lames L₁ₑₓₜ et L₂ₑₓₜ ont des quantités de mouvement respectives, MV₁ et MV₂, qui sont orientées vers le même côté du résonateur que le pied Pd, obliquement mais symétriquement, et la jonction commune des lames L₁ᵢₙₜ et L₂ᵢₙₜ possède une quantité de mouvement MV₁₂ qui est parallèle à l'axe médian Xₘ en étant orientée à l'opposé du pied Pd. Il en résulte que les lames L₁ᵢₙₜ et L₂ᵢₙₜ possèdent des quantités de mouvement respectives qui sont orientées vers le côté du résonateur qui est opposé au pied Pd, obliquement mais symétriquement. Alors, une répartition de masse dans la portion vibrante entre toutes les lames L₁ₑₓₜ, L₂ₑₓₜ, L₁ᵢₙₜ et L₂ᵢₙₜ peut être telle qu'un déplacement du pied Pd qui résulte de ces quantités de mouvement soit nul ou quasi-nul. Grâce à une telle absence de déplacement du pied Pd, la transmission d'énergie de vibration de la part de la portion vibrante à la partie de support Pf est nulle ou très faible, si bien que le facteur de qualité du résonateur peut être élevé. La répartition de masse optimisée entre les quatre lames de la partie vibrante est encore symétrique par rapport à l'axe médian, et peut être obtenue en attribuant une épaisseur commune eₑₓₜ aux deux lames L₁ₑₓₜ et L₂ₑₓₜ qui est différente de celle des deux lames L₁ᵢₙₜ et L₂ᵢₙₜ, notée eᵢₙₜ. Lorsqu'une telle optimisation est appliquée, le résonateur est équilibré. Les épaisseurs de lames eₑₓₜ et eᵢₙₜ sont mesurées parallèlement aux faces de la plaquette. Les valeurs des dimensions du résonateur qui procure son équilibrage peuvent être déterminées selon plusieurs méthodes, et notamment en utilisant des calculs par éléments finis.

Selon deux perfectionnements du résonateur qui sont montrés ensemble dans [Fig. 5a] mais qui peuvent être utilisés indépendamment l'un de l'autre, la partie vibrante du résonateur peut être complétée par deux masses d'inertie MI₁ et MI₂ pour le premier perfectionnement, et par un pédoncule Pc pour le second perfectionnement. De préférence, les deux masses d'inertie MI₁ et MI₂ sont situées aux extrémités distales des deux poutres P₁ et P₂, et sont identiques. Elles peuvent être formées chacune par un élargissement de la poutre correspondante P₁, P₂ au niveau de son extrémité distale. Le pédoncule Pc peut être formé par une lame additionnelle qui s'étend à partir de la jonction des extrémités proximales des lames L₁ᵢₙₜ et L₂ᵢₙₜ, parallèlement à l'axe médian Xₘ et en superposition avec lui, dans un sens qui est opposé au pied Pd. Avantageusement, le pédoncule Pc est aussi symétrique par rapport à l'axe médian Xₘ. L'ajout des deux masses d'inertie MI₁ et MI₂, et/ou celui du pédoncule Pc, à la portion vibrante du résonateur permet d'obtenir l'équilibrage de celui-ci avec des degrés de liberté supplémentaires, et donc plus facilement. [Fig. 5b] montre les déplacements des masses d'inertie MI₁ et MI₂ ainsi que celui du pédoncule Pc à un même instant pendant la vibration du résonateur. Les deux masses d'inertie MI₁ et MI₂ ont alors des composantes de quantités de mouvement MV₁ et MV₂, selon l'axe médian Xₘ, qui sont opposées à celle MV₁₂ du pédoncule Pc. Ces composantes de quantités de mouvement des masses d'inertie MI₁ et MI₂ et du pédoncule Pc se combinent avec celles des quatre lames L₁ₑₓₜ, L₂ₑₓₜ, L₁ᵢₙₜ et L₂ᵢₙₜ pour produire le déplacement du pied Pd, qui est nul ou sensiblement nul.

Pour le résonateur de [Fig. 5c], et comme cela est montré dans [Fig. 5d], au cours d'une vibration du résonateur, les deux masses d'inertie MI₁ et MI₂ se déplacent en phase parallèlement à l'axe médian Xₘ, alors que la jonction entre les lames L₁ᵢₙₜ et L₂ᵢₙₜ se déplace aussi parallèlement à l'axe médian Xₘ mais en opposition de phase par rapport aux masses d'inertie MI₁ et MI₂. Il en résulte une compensation au moins partielle des quantités de mouvement mises en jeu, si bien que le mouvement du pied Pd peut être réduit ou supprimé par un dimensionnement approprié du résonateur. Les masses d'inertie MI₁ et MI₂ sont nécessaires pour obtenir un équilibrage exact du résonateur, alors que le pédoncule Pc est optionnel, bien qu'il procure un degré de liberté supplémentaire pour les valeurs de dimensionnement qui procurent l'équilibrage du résonateur.

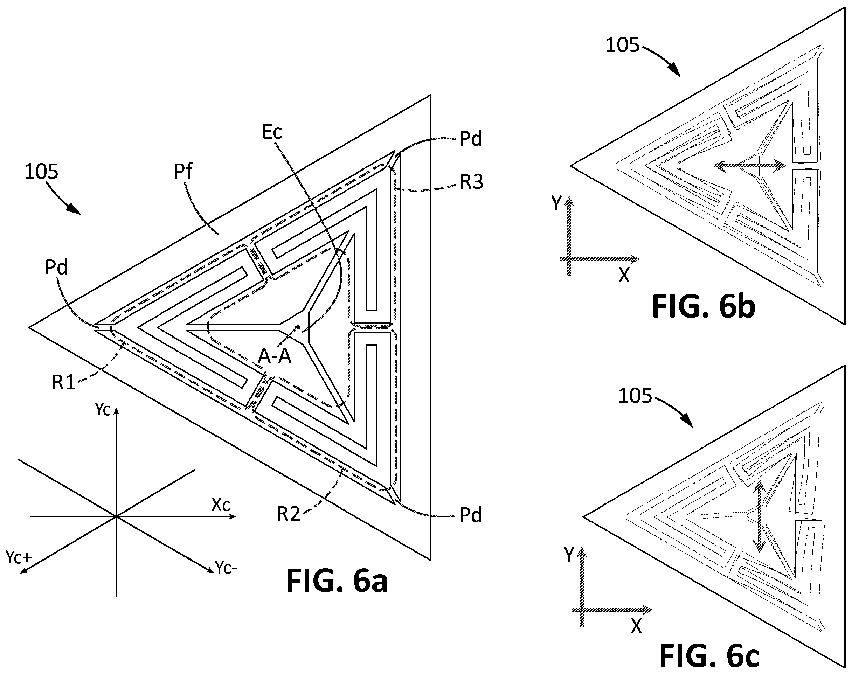

Le cinquième capteur angulaire inertiel 105 de [Fig. 6a] est obtenu à partir du second capteur de [Fig. 2a], en utilisant le modèle de résonateur de [Fig. 5a] à la place du modèle de résonateur à poutre unique qui est tenue par ses deux extrémités, pour chacun des résonateurs R1-R3. Le pied Pd de chacun des trois résonateurs R1-R3 est connecté à la partie fixe Pf dans un des angles du cadre triangulaire qui est formé par celle-ci. [Fig. 6b] et [Fig. 6c] montrent les deux modes dégénérés de vibration qui sont alors effectifs pour un tel cinquième capteur, avec les déplacements de l'élément de couplage Ec qui sont parallèles soit à l'axe X, soit à l'axe Y.

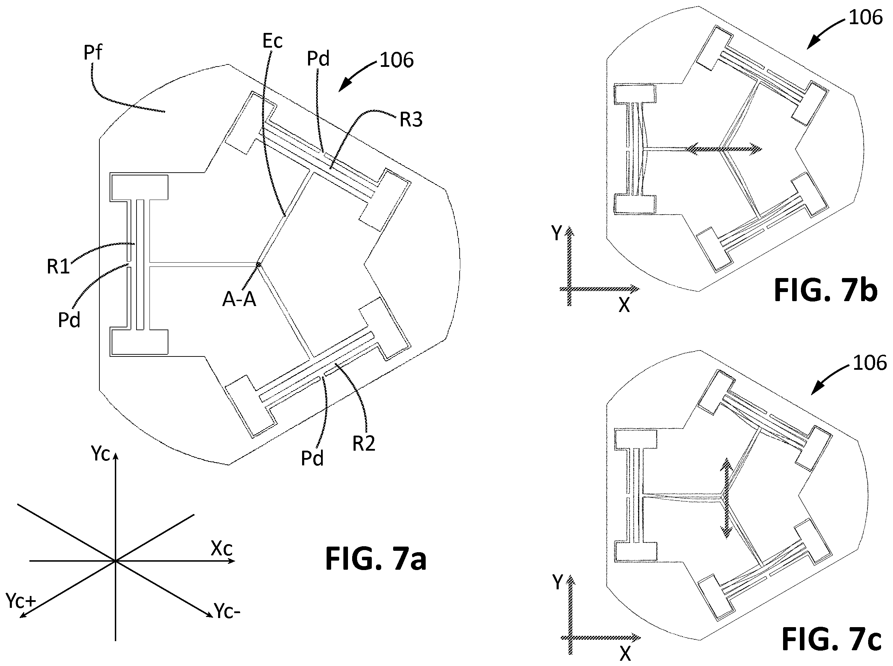

Le sixième capteur angulaire inertiel 106 de [Fig. 7a] est obtenu encore à partir du second capteur de [Fig. 2a], mais en utilisant cette fois le modèle de résonateur de [Fig. 5c] à la place du modèle de résonateur à poutre unique qui est tenue par ses deux extrémités, pour chacun des résonateurs R1-R3. Le pied Pd de chacun des trois résonateurs R1-R3 est connecté à la partie fixe Pf au milieu d'un des côtés du cadre qui est formé par celle-ci. [Fig. 7b] et [Fig. 7c] montrent les deux modes dégénérés de vibration qui sont alors effectifs pour un tel sixième capteur, avec les déplacements de l'élément de couplage Ec qui sont parallèles soit à l'axe X, soit à l'axe Y.

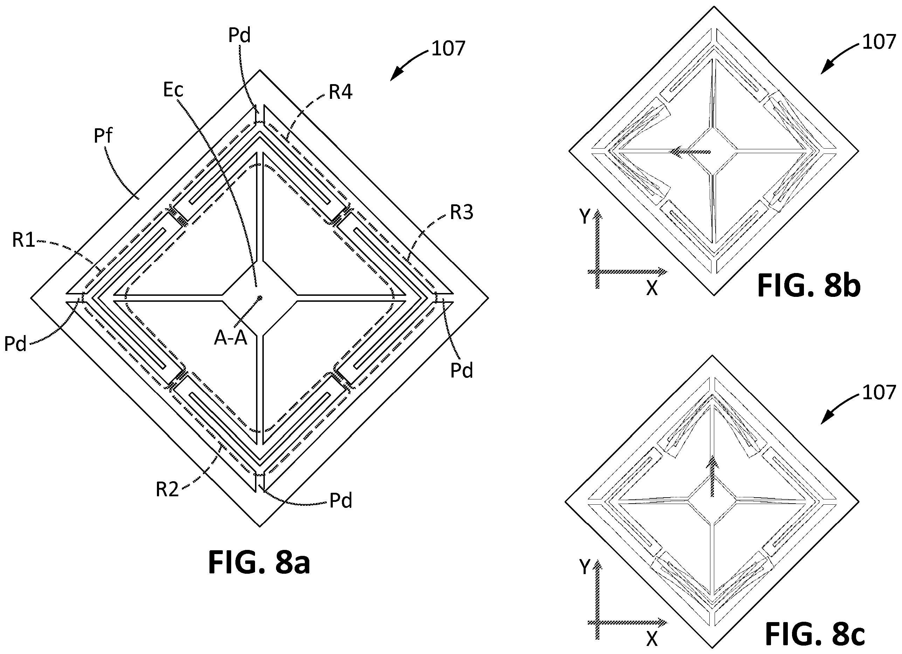

Enfin, le septième capteur angulaire inertiel 107 de [Fig. 8a] est obtenu à partir du premier capteur de [Fig. 1a], mais en utilisant cette fois le modèle de résonateur de [Fig. 5a] pour lequel l'angle α est maintenant égal à 90°, à la place du modèle de résonateur à poutre unique qui est tenue par ses deux extrémités, pour chacun des résonateurs R1-R4. Le pied Pd de chacun des quatre résonateurs R1-R4 est connecté à la partie fixe Pf dans un des angles du cadre carré qui est formé par celle-ci. [Fig. 8b] et [Fig. 8c] montrent les deux modes dégénérés de vibration qui sont alors effectifs pour un tel septième capteur, avec les déplacements de l'élément de couplage Ec qui sont parallèles soit à l'axe X, soit à l'axe Y.

Ces cinquième, sixième et septième capteurs angulaires inertiels, parce qu'ils sont constitués à partir de résonateurs qui sont équilibrés individuellement, permettent d'obtenir des gyromètres à fonctionnement intégrateur de haute performance, notamment avec des valeurs de facteurs de qualité pour le mode pilote et pour le mode détecteur qui sont élevées ou très élevées. La sensibilité des gyromètres ainsi obtenus peut être grande.

Tous les capteurs angulaires inertiels qui viennent d'être décrits peuvent avantageusement être réalisés à partir de plaquettes en monocristal de quartz α (α-SiO₂) ou tout autre monocristal du système trigonal de classe de symétrie 32, comme l'orthophosphate de gallium (GaPO₄), l'oxyde de germanium (GeO₂), l'arséniate de gallium (GaAsO₄), ou encore les cristaux de la famille des LGX : la langasite (LGS ou La₃Ga₅SiO₁₄), le langatate (LGT ou La₃Ga₅,5TaO,5O₁₄) ou la langanite (LGN ou La₃Ga₅,5NbO,5O₁₄). Ces matériaux sont piézoélectriques. Dans ce cas, et lorsque des résonateurs du modèle de [Fig. 5a] ou du modèle de [Fig. 5c] sont utilisés, les orientations des poutres P₁ et P₂ de chaque résonateur du capteur, c'est-à-dire leurs axes longitudinaux A₁ et A₂, sont avantageusement choisies parallèles aux axes cristallographiques Yc, Yc+ et Yc-, et les faces de la plaquette sont parallèles au plan cristallographique Xc-Yc. Une telle orientation du motif du capteur par rapport au cristal de la plaquette permet de bénéficier d'un couplage piézoélectrique optimal pour exciter le mode pilote et détecter le mode détecteur, conformément à leurs vibrations respectives de flexion dans le plan cristallographique Xc-Yc. En effet, le tenseur piézoélectrique des cristaux de classe trigonale offre un couplage optimal de la déformation Syy, le long de l'axe de chaque poutre, avec le champ électrique Exx. Cela permet d'exciter par effet piézoélectrique direct la vibration de flexion du mode pilote via des électrodes qui sont placées le long des lames pour générer un champ électrique Exx, et de détecter les déformations Syy via des charges électriques qui sont générées par effet piézoélectrique indirect sur ces mêmes électrodes. Plusieurs configurations différentes d'électrodes sont connues pour cela. Selon une première de ces configurations, qui est illustrée par [Fig. 9], trois segments d'électrodes sont disposés sur chacune des deux faces de chaque lame qui coïncide avec une des faces de la plaquette. Les électrodes d'une telle première configuration sont simples à réaliser par des procédés de dépôt de matériau conducteur. Selon une autre configuration aussi possible, deux segments d'électrodes sont disposés sur chacun des deux flancs de chaque lame qui est perpendiculaire aux faces de la plaquette. Une telle autre configuration est plus efficace, mais plus difficile à réaliser, comme décrit par exemple dans US 4,524,619. La même orientation du motif du capteur par rapport au cristal de la plaquette permet aussi de bénéficier de l'axe cristallographique Z selon lequel la vitesse de gravure chimique humide est supérieure, cet axe Z étant alors perpendiculaire aux faces de la plaquette utilisée. Les capteurs peuvent alors être produits à bas coût en utilisant un procédé de gravure chimique humide, notamment un tel procédé qui utilise une mixture de fluorure d'ammonium (NH₄F) et d'acide fluoridrique (HF). En outre, chaque résonateur qui est conforme à [Fig. 5a] ou [Fig. 5c], et qui est fabriqué dans une plaquette de matériau monocristallin du système trigonal de classe de symétrie 32, et avec l'orientation indiquée ci-dessus par rapport aux axes cristallographiques, est obtenu directement sans défaut de symétrie à l'issue de l'étape de gravure chimique humide. Chaque résonateur est donc ainsi équilibré directement, et les résonateurs des capteurs angulaires inertiels de [Fig. 6a] et [Fig. 7a] sont rigoureusement identiques.

Une telle possibilité de fabrication du motif des capteurs en utilisant seulement un procédé de gravure chimique humide est particulièrement avantageuse, à cause du bas prix de revient que procure ce procédé de fabrication collective de micro-dispositifs. En outre, le procédé de gravure chimique humide préserve les coefficients de qualité intrinsèques du cristal. En effet, la gravure chimique est basée sur une réaction locale qui produit la dissolution du cristal atome par atome. De ce fait, elle n'altère pas le réseau cristallin du matériau de la plaquette qui reste pour constituer le capteur. Tel n'est pas le cas pour les gravures qui sont basées sur une abrasion locale, comme l'usinage ultrasonore qui utilise des grains abrasifs excités par des ondes ultrasonores générées entre une sonde (sonotrode) et la surface à graver, ou encore le bombardement ionique qui utilise l'énergie cinétique d'ions. Ces deux dernières techniques dégradent le réseau cristallin en périphérie de la gravure sur des distances caractéristiques de quelques dizaines de nanomètres à quelques micromètres pour les gravures les plus énergétiques, et le coefficient de qualité intrinsèque des résonateurs est limité en conséquence, d'autant plus qu'une miniaturisation importante du capteur est recherchée.

Il est entendu que l'invention ne se limite pas aux matériaux piézoélectriques du système trigonal de classe de symétrie 32. Le principe de résonateurs identiques qui sont découplés vis-à-vis de leur fixation, agencés en configuration axisymétrique, et couplés entre eux par un élément de couplage aussi axisymétrique, peut être combiné avec l'utilisation d'autres matériaux, en particulier le cristal de silicium. Compte-tenu de la structure cristalline de classe cubique du monocristal de silicium, des agencements à base de quatre résonateurs sont préférables, comme ceux de [Fig. 1a], [Fig. 3a], [Fig. 4a] et [Fig. 8a]. L'excitation du mode pilote peut alors être réalisée en mettant en œuvre des forces électrostatiques, et l'amplitude du mode détecteur peut être déterminée par une mesure de capacité entre une partie fixe du capteur et une partie de celui qui est en mouvement.

## Revendications

1. Capteur angulaire inertiel (101-107), comprenant au moins trois résonateurs (R1-R3 ; R1-R4) identiques qui sont disposés symétriquement autour d'un axe, appelé axe sensible (A-A), de façon à être invariants par une rotation de 2π/n autour de l'axe sensible, où n est le nombre des résonateurs du capteur,
les n résonateurs (R1-R3 ; R1-R4) étant couplés entre eux de sorte que le capteur possède au moins deux modes dégénérés de vibration permettant de caractériser une rotation du capteur autour de l'axe sensible (A-A),
chacun des résonateurs (R1-R3 ; R1-R4) comprenant une portion respective d'une plaquette à deux faces opposées qui sont planes et parallèles, la portion de plaquette dédiée à chaque résonateur étant destinée à vibrer par flexion lors d'une utilisation du capteur, et appelée portion vibrante dudit résonateur,
la plaquette étant commune aux n résonateurs (R1-R3 ; R1-R4) du capteur, et
le capteur comprenant en outre un élément de couplage (Ec) qui relie la portion vibrante de chaque résonateur (R1-R3 ; R1-R4) aux portions vibrantes de tous les autres des n résonateurs du capteur, l'élément de couplage étant aussi invariant par la rotation de 2π/n autour de l'axe sensible (A-A), et les portions vibrantes des n résonateurs étant réparties angulairement autour de l'élément de couplage,
le capteur étant **caractérisé en ce que** la portion vibrante de chaque résonateur (R1-R3 ; R1-R4) est reliée à une partie de support (Pf) du capteur qui est externe aux portions vibrantes et à l'élément de couplage (Ec), par un segment intermédiaire de la plaquette, appelé pied (Pd), dédié au résonateur, ledit pied étant continu de matériau avec la portion vibrante et formant une liaison entre la partie de support et ladite portion vibrante,
et **en ce que** pour chaque résonateur (R1-R3 ; R1-R4) :
la portion vibrante dudit résonateur possède un premier plan de symétrie, appelé plan médian, qui est parallèle aux deux faces de la plaquette et équidistant avec lesdites deux faces, et un second plan de symétrie, appelé plan de symétrie orthogonal à la plaquette, qui est perpendiculaire au plan médian et passe longitudinalement par la liaison que forme le pied (Pd) entre la partie de support et la portion vibrante,
une intersection entre le plan médian et le plan de symétrie orthogonal à la plaquette constitue un axe médian (Xₘ) de la portion vibrante,
la portion vibrante comprend deux extensions (P₁, P₂) qui sont destinées chacune à vibrer par flexion, lesdites deux extensions s'étendant à partir du pied (Pd) symétriquement de chaque côté du plan de symétrie orthogonal à la plaquette,
chaque extension (P₁, P₂) est pourvue d'une fente longitudinale (FL₁, FL₂) qui traverse la portion vibrante perpendiculairement au plan médian, à partir du plan de symétrie orthogonal à la plaquette en direction d'une extrémité distale de ladite extension, mais sans atteindre ladite extrémité distale, de sorte que chaque extension soit formée par un méandre,
les fentes (FL₁, FL₂) respectives des deux extensions (P₁, P₂) étant symétriques par rapport au plan de symétrie orthogonal à la plaquette, et se rejoignant au niveau dudit plan de symétrie orthogonal à la plaquette, de sorte que la portion vibrante comprenne deux segments primaires (L₁ₑₓₜ, L₂ₑₓₜ) qui relient chacun le pied (Pd) à l'extrémité distale de l'une des extensions, et deux segments secondaires (L₁ᵢₙₜ, L₂ᵢₙₜ) qui sont reliés l'un à l'autre au niveau du plan de symétrie orthogonal à la plaquette par des extrémités proximales respectives desdits segments secondaires, et qui s'étendent chacun jusqu'à l'extrémité distale de l'une des extensions pour être connectée à l'un des segments primaires au niveau de ladite extrémité distale,
si bien que pour les deux modes dégénérés de vibration du capteur qui permettent de caractériser la rotation autour de l'axe sensible (A-A), la partie vibrante de chaque résonateur ne possède que des déplacements qui sont parallèles au plan médian, et qui sont symétriques par rapport au plan de symétrie orthogonal à la plaquette, les deux segments primaires (L₁ₑₓₜ, L₂ₑₓₜ) ayant des composantes de vitesse instantanées, parallèles à l'axe médian (Xₘ), qui ont un sens opposé à chaque instant pendant la vibration, à un sens de composantes de vitesse instantanées des segments secondaires (L₁ᵢₙₜ, L₂ᵢₙₜ), aussi parallèles à l'axe médian.

2. Capteur selon la revendication 1, dans lequel l'élément de couplage (Ec) est constitué par un motif formé dans la plaquette, et est continu de matériau avec la portion vibrante de chaque résonateur (R1-R3 ; R1-R4).

3. Capteur selon la revendication 1 ou 2, dans lequel pour chaque résonateur (R1-R3 ; R1-R4), la portion vibrante présente une répartition de masse telle que chaque mode dégénéré de vibration du capteur qui ne comporte que des déplacements parallèles au plan médian et qui est symétrique par rapport au plan de symétrie orthogonal à la plaquette, pour ledit résonateur, ne provoque pas de déplacement du pied (Pd) parallèlement à l'axe médian (Xₘ).

4. Capteur selon l'une quelconque des revendications précédentes, dans lequel chaque extension (P₁, P₂) de chaque résonateur (R1-R3) comporte, au niveau de son extrémité distale et parallèlement au plan médian, un élargissement par rapport à des bords longitudinaux externes des segments primaire (L₁ₑₓₜ, L₂ₑₓₜ) et secondaire (L₁ᵢₙₜ, L₂ᵢₙₜ) de ladite extension.

5. Capteur selon l'une quelconque des revendications précédentes, dans lequel l'élément de couplage (Ec) est relié à la portion vibrante de chaque résonateur (R1-R3 ; R1-R4) au niveau des extrémités proximales des segments secondaires (L₁ᵢₙₜ, L₂ᵢₙₜ) reliées l'une à l'autre, parallèlement à l'axe médian (Xₘ) du résonateur et sur un côté de ladite portion vibrante qui est opposé au pied (Pd) dudit résonateur.

6. Capteur selon l'une quelconque des revendications précédentes, dans lequel le matériau de la plaquette est monocristallin de classe trigonale et piézoélectrique, et dans lequel pour chaque résonateur (R1-R3 ; R1-R4) :
l'axe médian (Xₘ) de la portion vibrante est parallèle à un axe Xc dudit matériau, et
les deux segments primaires (L₁ₑₓₜ, L₂ₑₓₜ) et les deux segments secondaires (L₁ᵢₙₜ, L₂ᵢₙₜ) de la portion vibrante sont parallèles à des axes Yc dudit matériau.

7. Capteur selon l'une quelconque des revendications précédentes, dans lequel les deux extensions (P₁, P₂) de la portion vibrante de chaque résonateur (R1-R3 ; R1-R4) forment entre elles un angle (α) qui est égal à 60°, 90° ou 180°.

8. Capteur selon l'une quelconque des revendications précédentes, comprenant en outre :
- des moyens d'excitation, adaptés pour générer des déformations par flexion des portions vibrantes des n résonateurs (R1-R3 ; R1-R4) selon un premier des modes dégénérés de vibration ; et
- des moyens de détection, adaptés pour mesurer une amplitude de vibration du capteur selon un autre des modes dégénérés de vibration, qui est différent dudit premier mode dégénéré de vibration.

9. Gyromètre comprenant un capteur angulaire inertiel, ledit capteur étant selon l'une quelconque des revendications précédentes.

## Patentansprüche

1. Trägheitswinkelsensor (101-107), umfassend mindestens drei identische Resonatoren (R1-R3; R1-R4), die symmetrisch um eine Achse, genannt Messachse (A-A), angeordnet sind, um durch eine Drehung von 2π/n um die Messachse invariant zu sein, wobei n die Anzahl der Resonatoren des Sensors ist, wobei die n Resonatoren (R1-R3; R1-R4) so miteinander gekoppelt sind, dass der Sensor mindestens zwei entartete Vibrationsmodi vorweist, die es ermöglichen, eine Drehung des Sensors um die Messachse (A-A) zu kennzeichnen,
jeder der Resonatoren (R1-R3; R1-R4) umfassend einen jeweiligen Abschnitt einer Platte mit zwei gegenüberliegenden Flächen, die eben und parallel sind, wobei der Plattenabschnitt, der für jeden Resonator vorgesehen ist, dazu bestimmt ist, bei einer Verwendung des Sensors durch Biegung zu vibrieren, und vibrierender Abschnitt des Resonators genannt wird,
wobei die Platte den n Resonatoren (R1-R3; R1-R4) des Sensors gemeinsam ist, und der Sensor ferner umfassend ein Kopplungselement (Ec), das den vibrierenden Abschnitt jedes Resonators (R1-R3; R1-R4) mit den vibrierenden Abschnitten aller anderen der n Resonatoren des Sensors verbindet, wobei das Kopplungselement ebenfalls durch die Drehung von 2π/n um die Messachse (A-A) invariant ist und die vibrierenden Abschnitte der n Resonatoren winkelmäßig um das Kopplungselement verteilt sind,
der Sensor **dadurch gekennzeichnet ist, dass** der vibrierende Abschnitt jedes Resonators (R1-R3; R1-R4) mit einem Trägerteil (Pf) des Sensors, das sich außerhalb der vibrierenden Abschnitte und des Kopplungselements (Ec) befindet, durch ein Zwischensegment der Platte, genannt Fuß (Pd), verbunden ist, das für den Resonator vorgesehen ist, wobei der Fuß mit dem vibrierenden Abschnitt materialmäßig durchgehend ist und eine Verbindung zwischen dem Trägerteil und dem vibrierenden Abschnitt herstellt, und **dass** für jeden Resonator (R1-R3; R1-R4): der vibrierende Abschnitt des Resonators eine erste Symmetrieebene, genannt Mittelebene, die parallel zu den zwei Flächen der Platte und abstandsgleich zu den zwei Flächen ist, und eine zweite Symmetrieebene, genannt Symmetrieebene, die zu der Platte orthogonal ist, aufweist, die senkrecht zu der Mittelebene ist und in Längsrichtung durch die Verbindung verläuft, die der Fuß (Pd) zwischen dem Trägerteil und dem vibrierenden Abschnitt ausbildet,
ein Schnittpunkt zwischen der Mittelebene und der Symmetrieebene, die zu der Platte orthogonal ist, eine Mittelachse (Xₘ) des vibrierenden Abschnitts bildet,
wobei der vibrierende Abschnitt zwei Verlängerungen (P₁, P₂) umfasst, die jeweils dazu bestimmt sind, durch Biegung zu vibrieren, wobei sich die zwei Verlängerungen ausgehend von dem Fuß (Pd) symmetrisch auf jeder Seite der Symmetrieebene erstrecken, die zu der Platte orthogonal ist,
jede Verlängerung (P₁, P₂) mit einem Längsschlitz (FL₁, FL₂) versehen ist, der den vibrierenden Abschnitt senkrecht zu der Mittelebene ausgehend von der Symmetrieebene, die zu der Platte orthogonal ist, in Richtung eines distalen Endes der Verlängerung durchläuft, aber ohne das distale Ende zu erreichen, sodass jede Verlängerung durch eine Windung ausgebildet wird,
wobei die jeweiligen Schlitze (FL₁, FL₂) der zwei Verlängerungen (P₁, P₂) relativ zu der Symmetrieebene, die zu der Platte orthogonal ist, symmetrisch sind und sich an der Symmetrieebene treffen, die zu der Platte orthogonal ist, sodass der vibrierende Abschnitt zwei Primärsegmente (L₁ₑₓₜ, L₂ₑₓₜ), die den Fuß (Pd) jeweils mit dem distalen Ende einer der Verlängerungen verbinden, und zwei Sekundärsegmente (L₁ᵢₙₜ, L₂ᵢₙₜ) umfasst, die an der Symmetrieebene, die zu der Platte orthogonal ist, durch jeweilige proximale Enden der Sekundärsegmente miteinander verbunden sind und die sich jeweils bis zu dem distalen Ende einer der Verlängerungen erstrecken, um an eines der Primärsegmente an dem distalen Ende gebunden zu sein,
sodass für die zwei entarteten Vibrationsmodi des Sensors, die es ermöglichen, die Drehung um die Messachse (A-A) zu kennzeichnen, der vibrierende Abschnitt jedes Resonators ausschließlich Verschiebungen vorweist, die zu der Mittelebene parallel sind und die relativ zu der Symmetrieebene, die zu der Platte orthogonal ist, symmetrisch sind, die zwei Primärsegmente (L₁ₑₓₜ, L₂ₑₓₜ) momentane Geschwindigkeitskomponenten aufweisen, die zu der Mittelachse (Xₘ) parallel sind, die zu jedem Zeitpunkt während der Vibration eine entgegengesetzte Richtung zu der Richtung der momentanen Geschwindigkeitskomponenten der Sekundärsegmente (L₁ᵢₙₜ, L₂ᵢₙₜ), die ebenfalls zu der Mittelachse parallel sind, aufweisen.

2. Sensor nach Anspruch 1, wobei das Kopplungselement (Ec) aus einem Muster besteht, das in der Platte ausgebildet ist, und mit dem vibrierenden Abschnitt jedes Resonators (R1-R3; R1-R4) materialmäßig durchgehend ist.

3. Sensor nach Anspruch 1 oder 2, wobei für jeden Resonator (R1-R3; R1-R4) der vibrierende Abschnitt eine derartige Massenverteilung aufweist, dass jeder entartete Vibrationsmodus des Sensors, der ausschließlich Verschiebungen vorweist, die zu der Mittelebene parallel sind, und der relativ zu der Symmetrieebene, die zu der Platte orthogonal ist, symmetrisch ist, für den Resonator, keine Verschiebung des Fußes (Pd) parallel zu der Mittelachse (Xₘ) verursacht.

4. Sensor nach einem der vorstehenden Ansprüche, wobei jede Verlängerung (P₁, P₂) jedes Resonators (R1-R3) an ihrem distalen Ende und parallel zu der Mittelebene eine Ausweitung relativ zu den äußeren Längskanten der Primärsegmente (L₁ₑₓₜ, L₂ₑₓₜ) und der Sekundärsegmente (L₁ᵢₙₜ, L₂ᵢₙₜ) der Verlängerung vorweist.

5. Sensor nach einem der vorstehenden Ansprüche, wobei das Kopplungselement (Ec) mit dem vibrierenden Abschnitt jedes Resonators (R1-R3; R1-R4) an den proximalen Enden der Sekundärsegmente (L₁ᵢₙₜ, L₂ᵢₙₜ), die miteinander verbunden sind, parallel zu der Mittelachse (X ₘ) des Resonators und auf einer Seite des vibrierenden Abschnitts verbunden ist, die dem Fuß (Pd) des Resonators gegenüberliegt.

6. Sensor nach einem der vorstehenden Ansprüche, wobei das Material der Platte monokristallin der trigonalen Klasse und piezoelektrisch ist und wobei für jeden Resonator (R1-R3; R1-R4):
die Mittelachse (Xₘ) des vibrierenden Abschnitts parallel zu einer Achse Xc des Materials ist, und
die zwei Primärsegmente (L₁ₑₓₜ, L₂ₑₓₜ) und die zwei Sekundärsegmente (L₁ᵢₙₜ, L₂ᵢₙₜ) des vibrierenden Abschnitts parallel zu den Achsen Yc des Materials sind.

7. Sensor nach einem der vorstehenden Ansprüche, wobei die zwei Verlängerungen (P₁, P₂) des vibrierenden Abschnitts jedes Resonators (R1-R3; R1-R4) untereinander einen Winkel (α) ausbilden, der gleich 60°, 90° oder 180° ist.

8. Sensor nach einem der vorstehenden Ansprüche, ferner umfassend:
- Anregungsmittel, die zum Erzeugen von Verformungen durch Biegung der vibrierenden Abschnitte der n Resonatoren (R1-R3; R1-R4) gemäß einem ersten der entarteten Vibrationsmodi angepasst sind; und
- Erfassungsmittel, die zum Messen einer Vibrationsamplitude des Sensors gemäß einem anderen der entarteten Vibrationsmodi angepasst sind, der sich von dem ersten entarteten Vibrationsmodus unterscheidet.

9. Gyrometer, umfassend einen Trägheitswinkelsensor, wobei der Sensor nach einem der vorstehenden Ansprüche ist.

## Claims

1. An inertial angular position sensor (101-107), comprising at least three identical resonators (R1-R3; R1-R4) arranged symmetrically about an axis, referred to as the sensitive axis (A-A), so as to be invariant under a rotation of 2π/n about the sensitive axis, where n is the number of resonators of the sensor,
the n resonators (R1-R3; R1-R4) being coupled together so that the sensor has at least two degenerate modes of vibration, making it possible to characterize a rotation of the sensor about the sensitive axis (A-A),
each of the resonators (R1-R3; R1-R4) comprising a respective portion of a wafer having two opposite faces which are flat and parallel, the wafer portion dedicated to each resonator being intended to vibrate flexurally during use of the sensor, and referred to as the vibrating portion of said resonator,
the wafer being common to the n resonators (R1-R3; R1-R4) of the sensor, and
the sensor further comprising a coupling element (Ec) which connects the vibrating portion of each resonator (R1-R3; R1-R4) to the vibrating portions of all the others among the n resonators of the sensor, the coupling element also being invariant under the rotation of 2π/n about the sensitive axis (A-A), and the vibrating portions of the n resonators being angularly distributed about the coupling element,
the sensor being **characterized in that** the vibrating portion of each resonator (R1-R3; R1-R4) is connected to a support part (Pf) of the sensor which is external to the vibrating portions and to the coupling element (Ec), by an intermediate segment of the wafer, referred to as the foot (Pd), which is dedicated to the resonator, said foot being integral with the vibrating portion and forming a connection between the support part and said vibrating portion,
and **characterized in that**, for each resonator (R1-R3; R1-R4):
the vibrating portion of said resonator has a first plane of symmetry, referred to as the midplane, which is parallel to both faces of the wafer and equidistant from said two faces, and a second plane of symmetry, referred to as the plane of symmetry orthogonal to the wafer, which is perpendicular to the midplane and passes longitudinally through the connection formed by the foot (Pd) between the support part and the vibrating portion,
an intersection between the midplane and the plane of symmetry orthogonal to the wafer forms a center axis (Xₘ) of the vibrating portion,
the vibrating portion comprises two extensions (P₁, P₂) which are each intended to vibrate flexurally, said two extensions extending symmetrically from the foot (Pd) on each side of the plane of symmetry orthogonal to the wafer,
each extension (P₁, P₂) is provided with a longitudinal slot (FL₁, FL₂) which passes through the vibrating portion perpendicularly to the midplane, from the plane of symmetry orthogonal to the wafer towards a distal end of said extension but without reaching said distal end, such that each extension is meander shaped,
the respective slots (FL₁, FL₂) of both extensions (P₁, P₂) being symmetrical relative to the plane of symmetry orthogonal to the wafer, and meeting at said plane of symmetry orthogonal to the wafer, so that the vibrating portion comprises two primary segments (L₁ₑₓₜ, L₂ₑₓₜ) which each connect the foot (Pd) to the distal end of one of the extensions, and two secondary segments (L₁ᵢₙₜ, L₂ᵢₙₜ) which are interconnected at the plane of symmetry orthogonal to the wafer by respective proximal ends of said secondary segments, and which each extend to the distal end of one of the extensions so as to connect to one of the primary segments at said distal end,
so that, for both degenerate modes of vibration of the sensor which make it possible to characterize the rotation about the sensitive axis (A-A), the vibrating portion of each resonator only has movements which are parallel to the midplane and which are symmetrical relative to the plane of symmetry orthogonal to the wafer, both primary segments (L₁ₑₓₜ, L₂ₑₓₜ) having instantaneous velocity components, parallel to the center axis (Xₘ), which at each instant during vibration, are in the opposite direction to that of instantaneous velocity components of the secondary segments (L₁ᵢₙₜ, L₂ᵢₙₜ), also parallel to the center axis.

2. The sensor according to claim 1, wherein the coupling element (Ec) is composed of a pattern formed in the wafer, and is integral with the vibrating portion of each resonator (R1-R3; R1-R4).

3. The sensor according to claim 1 or 2, wherein, for each resonator (R1-R3; R1-R4), the vibrating portion has a mass distribution such that each degenerate mode of vibration of the sensor which comprises only movements parallel to the midplane and which is symmetrical relative to the plane of symmetry orthogonal to the wafer, for said resonator, does not cause any movement of the foot (Pd) in parallel to the center axis (Xₘ).

4. The sensor according to any one of the preceding claims, wherein each extension (P₁, P₂) of each resonator (R1-R3) comprises, at its distal end and parallel to the midplane, a widening relative to outer longitudinal edges of the primary (L₁ₑₓₜ, L₂ₑₓₜ) and secondary (L₁ᵢₙₜ, L₂ᵢₙₜ) segments of said extension.

5. The sensor according to any one of the preceding claims, wherein the coupling element (Ec) is connected to the vibrating portion of each resonator (R1-R3; R1-R4) at the interconnected proximal ends of the secondary segments (L₁ᵢₙₜ, L₂ᵢₙₜ), in parallel to the center axis (Xm) of the resonator and on a side of said vibrating portion which is opposite to the foot (Pd) of said resonator.

6. The sensor according to any one of the preceding claims, wherein the material of the wafer is monocrystalline and of trigonal class and piezoelectric, and wherein, for each resonator (R1-R3; R1-R4):
the center axis (Xₘ) of the vibrating portion is parallel to an axis Xc of said material, and
both primary segments (L₁ₑₓₜ, L₂ₑₓₜ) and both two secondary segments (L₁ᵢₙₜ, L₂ᵢₙₜ) of the vibrating portion are parallel to axes Yc of said material.

7. The sensor according to any one of the preceding claims, wherein both extensions (P₁, P₂) of the vibrating portion of each resonator (R1-R3; R1-R4) form an angle (α) between them which is equal to 60°, 90° or 180°.

8. The sensor according to any one of the preceding claims, further comprising:
- excitation means, adapted for generating flexural deformations of the vibrating portions of the n resonators (R1-R3; R1-R4) according to a first one of the degenerate modes of vibration; and
- detection means, adapted for measuring a vibration amplitude of the sensor according to another of the degenerate modes of vibration which is different from said first degenerate mode of vibration.

9. A gyrometer comprising an inertial angular position sensor, said sensor being in accordance with any one of the preceding claims.
